# EUROPEAN PATENT APPLICATION

(11) **EP 3 226 130 A1**
(43) Date of publication of application: **04.10.2017**
(21) Application number: 17163326.6
(22) Date of filing: 28.03.2017
(51) Int. Cl.: G06F 9/445, G06F 15/78

(54) **RECONFIGURABLE CONTROL OF DIGITAL SENSORS**

(30) Priority: 28.03.2016 US 201615082583
(71) Applicant: Simmonds Precision Products, Inc., Vergennes, VT 05491 (US)
(72) Inventor: CARINI, Peter, Underhill, VT Vermont 05489 (US); FITZHUGH, Christopher, Essex Junction, VT Vermont 05452 (US)
(74) Representative: Hughes, Andrea Michelle

(57) **Abstract**

A sensor system includes a host computer (18), a digital sensor (12) and a digital bus (22a). The digital sensor includes a reconfigurable circuit (28) and a sensing element (32). The reconfigurable circuit is configured to control the digital sensor and the sensing element is configured to output electrical signals indicative of a sensed characteristic. The digital bus is configured to electronically connect the host computer and the digital sensor. The host computer is configured to provide a code base change to the digital sensor over the digital bus. The digital sensor is configured to reprogram the reconfigurable circuit using the code base change.

## Description

### BACKGROUND

The present invention relates generally to digital sensors, and in particular to a system and method of controlling digital sensors.

Condition monitoring systems, such as those included on aircraft, have traditionally included analog and digital sensors connected to provide raw data to a host computer. The host computer digitizes the analog sensor data and performs data processing to extract features of the monitored systems based on the raw data from the analog and digital sensors. This requires heavy processing by the host computer, and high bandwidth between the host and the digital sensors. It is desirable to expand the processing capabilities of the monitoring system without a significant increase in hardware or complexity.

### SUMMARY

A method of controlling a digital sensor includes configuring a controller of the digital sensor using a first code base; providing, via a digital bus, a second code base to the digital sensor from a host processor; configuring, by the digital sensor, the controller of the digital sensor using the second code base; and controlling the digital sensor based on the second code base.

A digital sensor includes an input interface, a sensing element and a reconfigurable controller. The input interface is connectable to a digital bus. The sensing element is configured to generate electrical signals indicative of a characteristic of an environment. The reconfigurable controller is configured using a first code base. The input interface is configured to receive a second code base from the digital bus and load the second code base into the reconfigurable controller. The reconfigurable controller is configured to process the electrical signals based on the first and second code bases.

A sensor system includes a host computer, at least one digital sensor and a digital bus. The digital sensor includes a reconfigurable circuit and a sensing element. The reconfigurable circuit is configured to control the digital sensor and the sensing element is configured to output electrical signals indicative of a sensed characteristic. The digital bus is configured to electronically connect the host computer and the digital sensor. The host computer is configured to provide a code base change to the digital sensor over the digital bus. The digital sensor is configured to reprogram the reconfigurable circuit using the code base change.

### BRIEF DESCRIPTION OF THE DRAWINGS

FIG. 1 is a block diagram illustrating a sensor system that includes reconfigurable digital sensors.
FIG. 2 is a flowchart illustrating a method of reconfiguring digital sensors within a sensor system.

### DETAILED DESCRIPTION

A digital sensor system is disclosed herein that includes digital sensors with reconfigurable controllers. The system includes a host computer and at least one reconfigurable digital sensor. An initial code base may be loaded into the reconfigurable controller for initial operation of the digital sensor. At a desired time, selected manually or automatically by a microprocessor of the host computer, a new code base may be loaded into the reconfigurable controller of the digital sensor. This desired time, for example, may be based upon a detected set of conditions of the system. This way, digital sensors may have their capabilities changed during operation of the system in order to suit the present needs of the system. The code bases may be precompiled and tested in order to ensure proper functionality of the sensor during operation of the system.

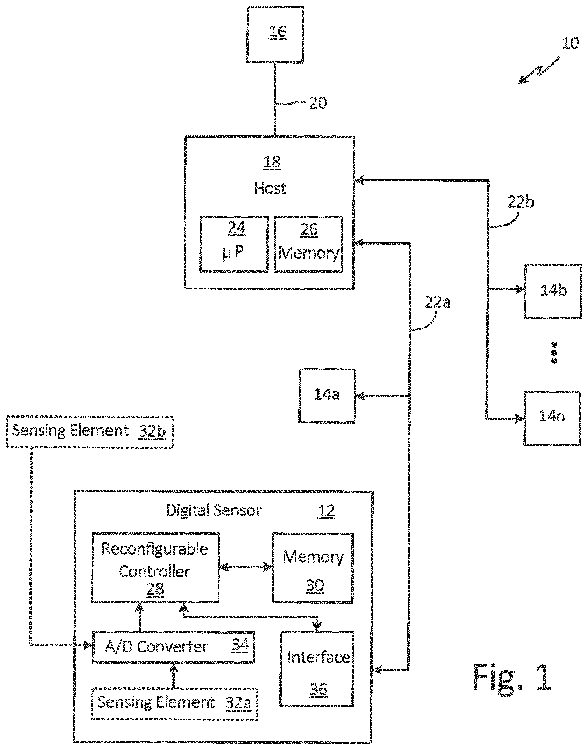

FIG. 1 is a block diagram illustrating sensor system 10 that includes digital sensors 12 and 14a-14n, analog sensor 16 and host 18. Analog sensor 16 is connected to host 18 over analog connection 20 which may be, for example, copper wires or other cables capable of transmitting analog signals to host 18. Digital sensors 12 and 14a are connected to digital bus 22a and digital sensors 14b-14n are connected to digital bus 22b. Host 18 includes microprocessor 24 and memory 26. Digital sensor 12 includes reconfigurable controller 28, memory 30, sensing elements 32a and 32b, analog-to-digital (A/D) converter 34 and bus interface 36. Digital sensors 12 and 14a-14n are any sensors capable of obtaining data regarding an environment and digitizing the data at the sensor. Analog sensor 16 is any sensor that obtains data regarding an environment and provides the analog data as output to host 18. Digital sensors 12 and 14a-14n, and analog sensor 16 may be any sensors such as, for example, accelerometers, tachometers, indexers, optical trackers, temperature, pressure, vibration, shock or strain sensors.

Digital sensor 12 includes reconfigurable controller 28 to allow changes in functionality of sensor 12 during operation of sensor system 10. Digital sensor 12 includes sensing elements 32a and/or 32b, which may be any type of transducer, for example, that produces an analog electrical output indicative of a characteristic of the environment. Sensing element 32b may be located at any physical location apart from digital sensor 12, while sensing 32a may be physically located at digital sensor 12. Digital sensor 12 may include only sensing element 32a, only sensing element 32b, or both sensing elements 32a and 32b. In other embodiments, digital sensor 12 may include multiple local and/or external sensing elements 32a and 32b.

In an embodiment, digital sensor 12 may be an accelerometer, for example, and sensing element 32a or 32b may provide an electrical output indicative of current g-forces experienced by digital sensor 12. The analog output signals are provided to A/D converter 34 which converts the analog signals into digital signals for reconfigurable controller 28. While illustrated as a separate circuit, A/D converter 34 may also be implemented integrally with reconfigurable controller 28. Reconfigurable controller 28 may be a microcontroller, field-programmable gate array (FPGA), or any other reprogrammable electronic device such as, for example, a programmable read-only memory (PROM), programmable logic array (PLA) or any other programmable logic device. Memory 30 may be configured to store data received from, or generated for transmission on, digital bus 22a. Memory 30 may be any electronic volatile or non-volatile memory such as, for example, dynamic or static random-access memory (RAM), flash memory or any other electronic memory device.

Host 18 may be any system that includes microprocessor 24 and memory 26 such as, for example, an engine controller or aircraft avionics system. Microprocessor 24 may be any device capable of executing software instructions to process data. Memory 26 may be any device capable of storing data electronically and may be any volatile or non-volatile memory device such as, for example, dynamic or static random-access memory (RAM), flash memory or any other type of electronic memory device.

Microprocessor 24 may be configured to provide code base changes to digital sensor 12, for example, and/or any other digital sensors 14a-14n that include reconfigurable controllers. The code base changes may be provided to digital sensors 12 and 14a-14n over respective digital buses 22a and 22b. Microprocessor 24 may provide the code base changes manually based on an external input (e.g., from a pilot of an aircraft that includes sensor system 10), for example, or may be programmed to automatically provide a code base change to one or more digital sensors 12 and 14a-14n. For example, if host 18 is implemented on an aircraft, microprocessor 24 may be configured to provide code base changes based on the current phase of flight. For example, it may be desirable to have digital sensor 12 process data differently when the aircraft is in takeoff as opposed to cruise. Other monitored conditions may also be utilized to trigger provision of a new code base from microprocessor 24 to one or more digital sensor 12 and 14a-14n. For example, host 18 may monitor conditions using sensors 12, 14a-14n and/or 16 to detect a predetermined set of conditions. Upon detection of the predetermined set of conditions, host 18 may provide a new code base to one or more of digital sensors 12 and 14a-14n.

Separate code bases may be stored in memory 26 of host 18. For example, as many code bases for sensors 12 and 14a-14n may be stored as memory 26 permits in some embodiments. The code bases may be compiled and tested on separate computer systems (not shown), external to sensor system 10. For example, for aircraft applications it may be desirable to compile and test code bases to verify compliance with any aircraft regulations prior to use on the aircraft. The code bases may be generated on the separate computer systems using any hardware or software languages, for example, that are then compiled into binary files. These binary files may be stored by host 18 and provided to digital sensors 12 and 14a-14n as desired.

Host 18 may provide a new code base to digital sensor 12 at any time. Upon sending a new code base, host 18 may first provide a code base command on digital bus 22a to indicate that a new code base is being transmitted. This may be any combination of bits or data packets that digital sensor 12 receives to indicate that host 18 is in the process of transmitting a new code base to digital sensor 12. Host 18 may also include an error check data packet or series of bits. This error check may be a cyclic redundancy check (CRC), checksum, or any other series of data bits that allows digital sensor 12 to verify the integrity of the data provided by host 18 for the transmitted code base. Host 18 may then transmit the code base to digital sensor 12, which may include a series of data packets or data bits that completes the binary file for the code base. It may be desirable to include the error check prior to the transmission of the code base to accommodate code bases of varying size. While described as including a command, an error check, and the code base, in other embodiments a transmission of a code base from host 18 to sensor 12 may include further data fields such as size fields, sensor indicator fields, or any other data that is desirable to include when sending the new code base to sensors 12 and/or 14a-14n.

Upon receipt of the new code base, sensor 12 may load the new code base into reconfigurable controller 28, which may reprogram the functionality of controller 28. For example, if controller 28 is an FPGA, the binary file may be loaded directly into the FPGA from memory 30, reprogramming the logic blocks of the FPGA. In other embodiments, reconfigurable controller 28 may be loaded using any method that allows digital sensor 12 to reprogram controller 28 using the received code base.

Digital sensor 12 may include bus interface 36 that is configured to perform receipt of new code bases, error checking of the data, and reprogramming of reconfigurable controller 28 using the new code base. Interface 36 may be a separate circuit (as illustrated in FIG. 1), or may be integral to reconfigurable controller 28. For example, interface 36 may utilize the error check data from host 18 to verify the binary file of the code base as it arrives. While interface 36 is verifying the data, the code base may be stored in memory 30. Once the data has been verified, an acknowledgement may be provided to host 18 to indicate successful transmission of the code base. If an error is detected in the transmitted data, an error indication may be provided to host 18, and host 18 may then retransmit the code base to sensor 12. Following transmission of the acknowledgment, interface 36 may reprogram reconfigurable controller 28 using the new code base stored in memory 30.

In this way, functionality of digital sensors 12 and/or 14a-14n may be changed during operation of sensor system 10. Reconfigurable controller 28 may be programmed with an initial code base, for example, that provides initial functionality of digital sensor 12. Host 18 may then provide new code bases at any desirable time to control functionality of each digital sensor 12 and 14a-14n. This provides sensor system 10 with greater flexibility, for example, and the ability to distribute processing as desired to balance processing loads and/or improve data bandwidth on data buses 22a and 22b.

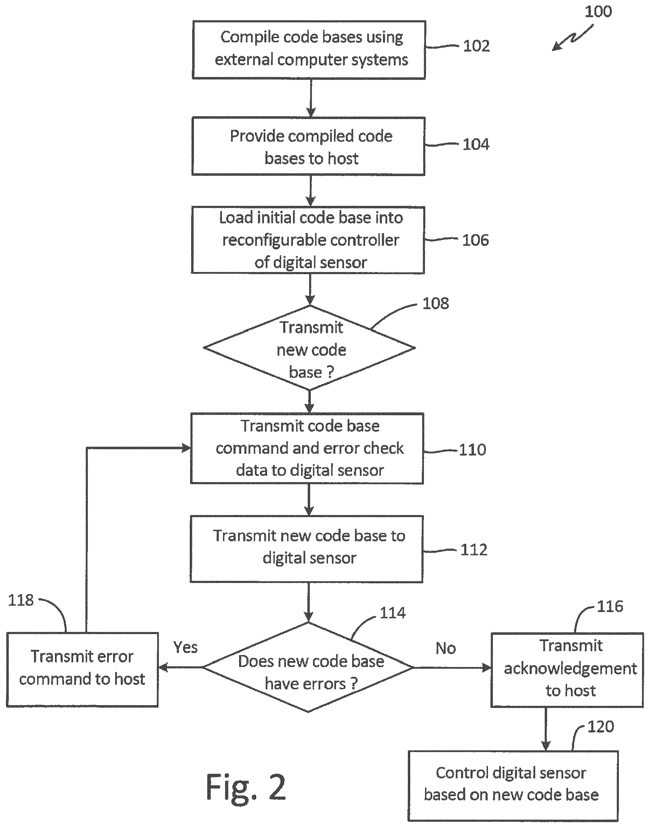

With continued reference to FIG. 1, FIG. 2 is a flowchart illustrating method 100 of controlling digital sensing for sensor system 10. In an embodiment described with reference to FIG. 2, sensor system 10 may be an aircraft sensor system, digital sensor 12 may be an accelerometer and analog sensor 16 may be a tachometer. At step 102, ground systems are utilized to program and compile code bases for use in programming reconfigurable controller 28 of digital sensor 12. The code bases may be tested and verified with regard to aircraft regulations prior to use during operation of system 10. At step 104, the code bases compiled during step 102, which may be in the form of binary files, are loaded into memory 26 of host 18. At step 106, reconfigurable controller 28 is programmed with an initial code base. This initial code base may allow sensor 12 to operate as a simple accelerometer, for example, outputting digital acceleration data on digital bus 22a to host 18 for processing.

Digital sensor 12 operates based on the initial code base until host 18 begins transmitting a new code base as indicated by decision step 108. When host 18 determines a new code base should be sent to digital sensor 12, method 100 proceeds to step 110. At step 110, host 18 begins by sending a code base command and error check data over digital bus 22a. At step 112, host 18 sends the new code base to digital sensor 12 as a binary file, for example, over digital bus 22a. At step 114, digital sensor 12 verifies the binary file using the error check data from host 18. If the binary file does not include any errors, method 100 proceeds to step 116 and provides an acknowledgement to host 18 over digital bus 22a. If errors in the binary file are detected, method 100 proceeds to step 118 and provides an error indication to host 18 over digital bus 22a. Following step 118, method 100 returns to step 110 and host 18 retransmits the new code base to digital sensor 12. Following step 116, method 100 proceeds to step 120.

At step 120, digital sensor 12 reprograms reconfigurable controller 28 using the binary file provided by host 18. For example, a new binary file may be loaded into an FPGA of the accelerometer in order to increase the data processing capability of sensor 12. Digital sensor 12 may be programmed to receive tachometer data, for example, indicative of rotations of a shaft of a turbine engine and utilize that tachometer data to calculate average acceleration data per revolution of the shaft. While described with reference to digital sensor 12, other digital sensors 14a-14n may also be reprogrammed by host 18 using method 100. By allowing reprogramming of digital sensors, the host may distribute processing functions to other sensors to reduce the load on the host when desired. Digital sensors may also be updated situationally such that the digital sensors provide desired output based upon, for example, the phase of flight or other operating condition of system 10. While illustrated as providing a single code base change, method 100 may be utilized to provide as many code base changes to digital sensor 12 as is desirable during operation of system 10.

### Discussion of Possible Embodiments

The following are non-exclusive descriptions of possible embodiments of the present invention.

A method of controlling a digital sensor includes configuring a controller of the digital sensor using a first code base; providing, via a digital bus, a second code base to the digital sensor from a host processor; configuring, by the digital sensor, the controller of the digital sensor using the second code base; and controlling the digital sensor based on the second code base.

The method of the preceding paragraph can optionally include, additionally and/or alternatively, any one or more of the following features, configurations, operations, and/or additional components:
In a further embodiment of the foregoing method, providing, via the digital bus, the second code base to the digital sensor includes sending, via the digital bus, a code base change command from the host processor to the digital sensor; providing, via the digital bus, the second code base to the digital sensor; and verifying, by the digital sensor, proper receipt of the second code base.

In a further embodiment of any of the foregoing methods, verifying, by the digital sensor, proper receipt of the second code base includes providing, via the digital bus, error check from the host processor to the digital sensor between the code base change command and the second code base; verifying, by the digital sensor, the second code base using error check data; and providing, via the digital bus, an acknowledgement from the second digital sensor to the host processor.

In a further embodiment of any of the foregoing methods, the controller is a field-programmable gate array (FPGA).

In a further embodiment of any of the foregoing methods, the second code base is a pre-compiled binary file.

In a further embodiment of any of the foregoing methods, providing, via the digital bus, a second code base to the digital sensor from the host processor includes detecting, by the host processor, a predetermined set of conditions; and providing, by the host processor, the second code base based on detection of the predetermined set of conditions.

A digital sensor includes an input interface, a sensing element and a reconfigurable controller. The input interface is connectable to a digital bus. The sensing element is configured to generate electrical signals indicative of a characteristic of an environment. The reconfigurable controller is configured using a first code base. The input interface is configured to receive a second code base from the digital bus and load the second code base into the reconfigurable controller. The reconfigurable controller is configured to process the electrical signals based on the first and second code bases.

The digital sensor of the preceding paragraph can optionally include, additionally and/or alternatively, any one or more of the following features, configurations, operations, and/or additional components:
In a further embodiment of the foregoing digital sensor, the digital sensor is a digital accelerometer.

In a further embodiment of any of the foregoing digital sensors, the reconfigurable controller is a field-programmable gate array (FPGA).

In a further embodiment of any of the foregoing digital sensors, the second code base is a pre-compiled binary file.

In a further embodiment of any of the foregoing digital sensors, the pre-compiled binary file is received from an external processor, and wherein the external processor provides error check data with the binary file.

In a further embodiment of any of the foregoing digital sensors, the input interface is configured to verify the integrity of the binary file using the error check data.

In a further embodiment of any of the foregoing digital sensors, the input interface is configured to provide an acknowledgement command as output to the digital bus if there is no error detected in the binary file, and wherein the input interface is further configured to provide an error command as output to the digital bus if there is an error detected in the binary file by the digital sensor.

A sensor system includes a host computer, a digital sensor and a digital bus. The digital sensor includes a reconfigurable circuit and a sensing element. The reconfigurable circuit is configured to control the digital sensor and the sensing element is configured to output electrical signals indicative of a sensed characteristic. The digital bus is configured to electronically connect the host computer and the digital sensor. The host computer is configured to provide a code base change to the digital sensor over the digital bus. The digital sensor is configured to reprogram the reconfigurable circuit using the code base change.

The sensor system of the preceding paragraph can optionally include, additionally and/or alternatively, any one or more of the following features, configurations, operations, and/or additional components:
In a further embodiment of the foregoing sensor system, the reconfigurable circuit is a field-programmable gate array (FPGA).

In a further embodiment of any of the foregoing sensor systems, the first code base change is a pre-compiled binary file stored in a memory of the host computer.

In a further embodiment of any of the foregoing sensor systems, the host processor provides a code base command and error check data with the binary file over the digital bus to the first digital sensor.

In a further embodiment of any of the foregoing sensor systems, the first digital sensor is configured to verify the integrity of the binary file using the error check data.

In a further embodiment of any of the foregoing sensor systems, wherein the first digital sensor is configured to provide an acknowledgement command to the host computer on the digital bus if there is no error detected in the binary file by the first digital sensor, and wherein the first digital sensor is further configured to provide an error command to the host computer on the digital bus if there is an error detected in the binary file by the first digital sensor.

A further embodiment of any of the foregoing sensor systems may further include a second digital sensor, wherein the host computer is further configured to provide a second code base change over the digital bus to reprogram the second digital sensor.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of controlling a digital sensor, the method comprising:
configuring a controller (28) of the digital sensor (12) using a first code base;
providing, via a digital bus (22a), a second code base to the digital sensor from a host processor (24);
configuring, by the digital sensor, the controller of the digital sensor using the second code base; and
controlling the digital sensor based on the second code base.

2. The method of claim 1, wherein providing, via the digital bus, the second code base to the digital sensor comprises:
sending, via the digital bus, a code base change command from the host processor to the digital sensor;
providing, via the digital bus, the second code base to the digital sensor; and
verifying, by the digital sensor, proper receipt of the second code base.

3. The method of claim 2, wherein verifying, by the digital sensor, proper receipt of the second code base comprises:
providing, via the digital bus, error check from the host processor to the digital sensor between the code base change command and the second code base;
verifying, by the digital sensor, the second code base using error check data; and
providing, via the digital bus, an acknowledgement from the second digital sensor to the host processor.

4. The method of claim 1, wherein the controller is a field-programmable gate array (FPGA).

5. The method of claim 4, wherein the second code base is a pre-compiled binary file.

6. The method of claim 1, wherein providing, via the digital bus, a second code base to the digital sensor from the host processor comprises:
detecting, by the host processor, a predetermined set of conditions; and
providing, by the host processor, the second code base based on detection of the predetermined set of conditions.

7. A sensor system comprising:
a host computer (18);
a first digital sensor (12) comprising:
a reconfigurable circuit (28) configured to control the first digital sensor; and
a sensing element (32) configured to output electrical signals indicative of a sensed characteristic; and
a digital bus (22a) configured to electronically connect the host computer and the first digital sensor;
wherein the host computer is configured to provide a first code base change to the first digital sensor over the digital bus, and wherein the first digital sensor is configured to reprogram the reconfigurable circuit using the first code base change.

8. The sensor system of claim 7, wherein the reconfigurable circuit (28) is a field-programmable gate array (FPGA).

9. The sensor system of claim 8, wherein the first code base change is a pre-compiled binary file stored in a memory (30) of the host computer.

10. The sensor system of claim 9, wherein the host computer (18) provides a code base command and error check data with the binary file over the digital bus to the first digital sensor.

11. The sensor system of claim 10, wherein the first digital sensor is configured to verify the integrity of the binary file using the error check data.

12. The sensor system of claim 11, wherein the first digital sensor is configured to provide an acknowledgement command to the host computer on the digital bus if there is no error detected in the binary file by the first digital sensor, and wherein the first digital sensor is further configured to provide an error command to the host computer on the digital bus if there is an error detected in the binary file by the first digital sensor.

13. The sensor system of claim 7, further comprising:
a second digital sensor (14), wherein the host computer (18) is further configured to provide a second code base change over the digital bus to reprogram the second digital sensor.
